Europäisches Patentamt

European Patent Office

Office européen des brevets

(19)

(11) Publication number: 0 219 593

A2

# (12) EUROPEAN PATENT APPLICATION

(21) Application number: 86102687.0

(22) Date of filing: 01.03.86

(51) Int. Cl.4: **A43B 13/12** , B29B 7/82 ,
//(B29L31/50,B29K105:04,23:00-
,29:00,B29L9:00)

(30) Priority: 16.09.85 ES 533829

(43) Date of publication of application:
**29.04.87 Bulletin 87/18**

(84) Designated Contracting States:
**DE FR GB IT**

(71) Applicant: **MANUFACTURA ESPANOLA DEL
CAUCHO, S.A.
Carretera Alicante, 36
Elche - Alicante(ES)**

(72) Inventor: **Macia Bueno, Miguel
Dtor. Maranon 17, 4o dcha.
Elche-Alicante(ES)**

(74) Representative: **Prato, Roberto et al
c/o Ingg. Carlo e Mario Torta Via Viotti 9
I-10121 Torino(IT)**

(54) A process for the production of soles for shoes.

(57) There is mixed a compound of ethyl-vinyl-ace-
tate, modified by the presence of materials such as
high density polyethylene, bi-monomer ethylene-pro-
pylene, polyisoprene, resines with high styrene con-
tent, and resins containing vinyl-acetate, such as
copolymers, and further addition of fillers, plasticiz-
ers, dyes, cross-linking and foaming agents, all this
being disposed in a mould and being able to be
arranged in layers of different colours, after which it
is submitted to a pressure higher than 90 kg/cm² and
at a temperature of 170°C.

EP 0 219 593 A2

## "A PROCESS FOR THE PRODUCTION OF SOLES FOR SHOES"

The present invention relates to a process for the production of soles for shoes in one sole operation being further possible changes of the colours with which one wishes to adorn said soles.

Up to now, it was very difficult to obtain the production of soles for shoes of very light and bi-coloured soles. On one hand, it was not economically profitable to obtain a light material having satisfactory properties of resistance and durability, but furthermore making soles from bi-coloured material, said soles not being from light enough material, presented the disadvantage arising from a production process in two steps, namely that the piece of each colour had to be adhered to the sole to obtain the final product.

The inconvenience increased in case one desired a tri-coloured product, whereby the cost rose greatly as well as for the density of the product owing to the presence of glues, as for the longer series of steps in the manufacturing process, running thus the risk that the final product resulted less flexible and lasting, because the pasted joint is then always subject to deterioration.

The formules used to obtain the above-mentioned materials were those giving a better result, without taking into account the specific gravity of the material used for the sole, being same generally produced from a conventional vulcanized rubber with a density higher than 1.

The use of foaming agents for the manufacture of vulcanized products, allows a substantially superior final result as to density of the product, but restricts its resistance with regard to the product that has been foamed.

Therefore, the main difficulty encountered in certain articles results from the fact that in the same way the content of the foaming agents in the material is increased, there is reduced the wear and abrasion as also the tear resistance etc. of the product.

Thus according to the process of the present invention, it is possible to obtain soles having a density of o,1, but these products will be reserved to very specific shoes -for example those to be used at the beach and during a short time -since their lightness and comfort are in contrast with their durability.

In spite of this, the tear and abrasion resistance of the product obtained according to the present process, has been substantially increased due to the presence of fillers, plasticizers and cross-linking agents.

For the production of soles for shoes (though this process could be used for manufacturing any other type of tridimensional material susceptible of being moulded, and which requires similar properties, such as for example surfing planks), one must start first with the prepared and homogenously mixed material, and a mould at the suitable temperature and pressure.

The manufacturing process, after having obtained the mixture which constitutes the raw material, comprises the compression of said material in the cavity of a mould maintained at a temperature of about 170°C and a pressure of about 90 kg/cm², the mould having any desired shape, appropriate to the final product.

The mixture of the material that is vulcanized at the above temperature, can have different colours. For bi-coloured or multi-coloured soles being necessary to previously place separating plates and the preformed material of the sole, so that the coloured portion is thinner. The constitution of soles with different colours is realized forming one sle bi-or multi-coloured piece, without the existance of gluing joints or flexibility or material defects, due to the presence of glues or to their lack at some points of the sole, as happens in those being made up by several layers of material.

The material constituting each of the pieces is a compound made of ethyl-vinyl-acetate, which is modified by means of the presence of materials such as high density polyethylene, bi-monomer ethylene-propylene, polyisoprene, resins with high styrene contents and resins containing vinyl-acetate, such as copolymers. These materials are mixed in proportion suitable for each use depending on the type of the required sole and according to the specific needs.

To this material are further added fillers, plasticizers, dyes, cross-linking agents and foaming agents.

The proceeding begins by weighing and dosifying the compounds, as specified already in relation with the desired final product. Then will be introduced in the unifying machine or mixer in the following order: first polymers which will homogenize with the previous mixture, after which the cross-linking agents will be introduced. These will homogenize together or not with the foaming agents, according to each specific case.

These operations will have an initial temperature of about 90°C and a final one of about 140°C.

After having carried out these steps, is effected the laminating and shaping of the premoulds which then will be introduced into the moulds under the conditions required to effectively carry out their vulcanization.

The result is that once the mixture of the material is made homogeneously, there are obtained pieces having a density ranging between 0'5 and 0'25, after compression of a pressure of about 90 kg/cm², the density varying proportionally to the employed foaming agents, being possible to attain the density of 0,1 in pieces appropriate for a light use which will have little resistance and minimum durability, but a very advantageously light weight.

It is quite obvious that the present proceeding will especially be destined to the manufacture of high quality pieces, with the greatest abrasion resistance, practically impossible to tear each piece and with the requested lightness. Consequently, and also depending on the use, there has been established as ideal ration lightness/quality, a density between 0'5 and 0'25, being the one at which the total weight of each piece is very low, but maintains still sufficient properties of durability as also wear and use resistance.

Within the scope of the present invention are included all those modifications which, though not essential, contain the same series of steps directed to obtain the same result, and using materials having similar characteristics.

The above-mentioned materials can be substituted by any other having similar characteristics.

## Claims

1. -A process for the production of soles for shoes in foamed ethyl-vinyl-acetate, characterized by weighing and dosifying the compounds in a first step after which they are introduced into a unifying machine or mixer in the following order: polymers that are homogenized, cross-linking and foaming agents, these latter being able to homogenize together or separately, a homogenizing or unifying step carried out at an initial temperature of about 90°C and a final one of approximately 140°c, after which is effected the lamination and shaping of premoulds that are introduced as last step into the moulds in which is produced the vulcanization at a suitable temperature and pressure for it.

2. -A process for the production of soles for shoes in foamed ethyl-vinyl-acetate according to claim 1, characterize because the materials used are ethyl-vinyl-acetate modified by the presence of such materials as for example high density polyethylene, bi-monomer ethylene-propylene, polyisoprene, resins with high styrene contents and resins containing vinyl-acetate, such as copolymers, and moreover fillers, plasticizers, dyes, cross-linking and foaming agents.